# EUROPÄISCHE PATENTSCHRIFT

(11) **EP 1 320 501 B1**
(45) Veröffentlichungstag und Bekanntmachung des Hinweises auf die Patenterteilung: **19.05.2004**
(21) Anmeldenummer: 01974281.6
(22) Anmeldetag: 22.09.2001
(51) Int. Cl.: B65G 47/84, B65G 17/26

(54) **VORRICHTUNG ZUR ÜBERGABE EINES PRODUKTES IN EINER VERPACKUNGSMASCHINE**
DEVICE FOR TRANSFERRING A PRODUCT IN A PACKING MACHINE
DISPOSITIF POUR TRANSFERER UN PRODUIT DANS UNE MACHINE D'EMBALLAGE

(30) Priorität: 26.09.2000 DE 10048007
(43) Veröffentlichungstag der Anmeldung: 25.06.2003
(73) Patentinhaber: IWK Verpackungstechnik GmbH, 76297 Stutensee-Blankenloch (DE)
(72) Erfinder: HÄHNEL, Bernd, 76297 Stutensee (DE); CHRIST, Richard, 56281 Emmelshausen (DE)
(74) Vertreter: Lasch, Hartmut Dipl.-Ing.
(86) Internationale Anmeldenummer: PCT/EP2001/010960
(87) Internationale Veröffentlichungsnummer: WO 2002/026601

(56) Entgegenhaltungen:
- EP-A- 0 983 941
- DE-A- 1 756 031
- US-A- 3 533 496
- US-A- 4 708 237

## Beschreibung

Die Erfindung betrifft eine Vorrichtung zur Übergabe eines Produktes in einer Verpackungsmaschine gemäß dem Oberbegriff des Anspruchs 1.

In einer Verpackungsmaschine müssen die Produkte und die Verpackungen, bei denen es sich beispielsweise um Faltschachteln handeln kann, entweder einzeln oder nach der Aufnahme des Produktes in der Verpackung als Einheit mehrere Stationen durchlaufen. Als Produkt im Sinne der Anmeldung ist dabei sowohl jedes Einzelprodukt als auch ein Stapel von einzelnen Produkten, z.B. Blisterstreifen, zu verstehen, der als Einheit gehandhabt wird.

Als Transportvorrichtung innerhalb der Verpackungsmaschine finden häufig endlos umlaufende Ketten- oder Bandförderer Verwendung, bei denen die Verpackungen und/oder die Produkte auf dem Obertrum gefördert werden. Im folgenden soll beispielhaft von der Übergabe eines aus mehreren übereinanderliegenden Blisterstreifen bestehenden Blisterstapels an einen Produkt-Bandförderer ausgegangen werden.

Die Einzelblister werden in einer Stapelstation zu einem Blisterstapel aufeinandergelegt und dann mittels einer Übergabevorrichtung an den Produkt-Bandförderer übergeben, wie es in der EP 0 876 278 B1 gezeigt ist. Die Übergabevorrichtung umfaßt eine Gleitfläche, an deren einem Ende der zu übergebende Blisterstapel in einer Übernahmestation bereitgestellt wird. Im Abstand oberhalb der Gleitfläche ist ein in einer vertikalen Ebene umlaufender Endlosförderer vorgesehen, der mehrere hervorstehende, mit dem Endlosförderer umlaufende Finger trägt. Um den Blisterstapel über die Gleitfläche zu verschieben, kann ein Finger den Blisterstapel hintergreifen und während seiner Bewegung entlang des Untertrums des Endlosförderers mitnehmen. Am Ende der Gleitfläche wird der Blisterstapel auf den Produkt-Bandförderer aufgeschoben und insbesondere in einem an diesem gebildeten Fach abgelegt, wodurch die Übergabe abgeschlossen ist.

Mit dieser Art des Verschiebens des Blisterstapels über die Gleitfläche sind verschiedene Nachteile verbunden. Einerseits muß der Finger relativ zu dem Blisterstapel sehr genau positioniert werden, um eine außermittige Einleitung der Schubkraft und somit ein Verkanten oder Schrägstellen des Blisterstapels zu vermeiden. Da die Breite der mittels der Übergabevorrichtung zu bewegenden Blisterstapel in Abhängigkeit von der Größe der jeweiligen Blisterstreifen variiert, muß auch die Position der Finger bei einem Produktwechsel immer neu ausgerichtet werden, was aufwendig und mühsam ist. Darüber hinaus besteht die Gefahr, daß die Blisterstapel bei einem plötzlichen Anhalten der Übergabevorrichtung sich infolge der Trägheitskraft von dem Finger lösen und über die Gleitfläche um eine kurze Strecke ohne Führung weiterrutschen, wobei sie in der Regel ihre vorbestimmte Orientierung verlassen und dementsprechend von einer Bedienperson aus der Verpackungsmaschine entfernt werden müssen, um einen ordnungsgemäßen Betrieb bei Wiederanlaufen der Übergabevorrichtung zu gewährleisten.

Aus der CH 410 759 ist es bekannt, einen Stapel von Produkten mittels eines mehrgliedrigen Schubarms, der an einem 1. umlaufenden Endlosförderer angebracht ist, in einen weiterführenden Förderkanal einzuschieben. Dem Förderkanal ist ein 2. umlaufender Endlosförderer zugeordnet, der Förderbügel trägt, mit denen der Produktstapel entlang des Förderkanals verschoben wird, nachdem der Schubarm den Stapel in den Förderkanal eingeschoben hat. Dabei sind die Geschwindigkeiten und Ausrichtungen des Schubarms und der Förderbügel so eingestellt, daß der Produktstapel am Ende der wirksamen Förderstrecke des 1. Endlosförderers des Schubarms auf seiner Rückseite mit dem Schubarm beaufschlagt ist und auf seiner Vorderseite gegen den vorlaufenden Förderbügel anstößt, so daß hier ein momentaner Zustand erreicht ist, in dem der Produktstapel zwischen zwei Elementen aufgenommen ist. Mit einer derartigen Übergabe sind ebenfalls die oben genannten Nachteile verbunden, da der Produktstapel über annähernd seinen Verschiebeweg lediglich mit dem Schubarm in Kontakt steht.

Aus der US-A-4 708 237 ist eine gattungsgemäße Vorrichtung bekannt.

Der Erfindung liegt die Aufgabe zugrunde, eine Vorrichtung zur Übergabe eines Produktes in einer Verpackungsmaschine zu schaffen, bei dem bzw. der die vorgenannten Nachteile vermieden sind und ein Produkt mit hoher Präzision übergeben werden kann.

Diese Aufgabe wird erfindungsgemäß mit den kennzeichnenden Merkmalen des Anspruchs 1 gelöst.

Es ist das dem Produkt vorlaufende Begrenzungselement vorgesehen, das an dem umlaufenden 2. Endlosförderer angebracht und von diesem angetrieben ist, wobei das Produkt zwischen dem Schubelement und dem Begrenzungselement vorzugsweise unter enger Passung geführt ist. Dabei sind das Schubelement und das Begrenzungselement an unterschiedlichen Endlosförderern angebracht, die vorzugsweise jeweils mit einer eigenen Antriebsvorrichtung versehen sind, so daß nach Beendigung des Verschiebevorganges eines Produktes in oben genannter Weise unterschiedliche Rückstellbewegungen für die Elemente vorgesehen sein können.

Die Endlosförderer sind oberhalb der Gleitfläche angeordnet und laufen parallel zueinander in jeweils einer vertikalen Ebene um.

Erfindungsgemäß ist vorgesehen, daß die Endlosförderer jeweils bidirektional antreibbar sind, wodurch die Möglichkeit gegeben ist, daß das vorlaufende Begrenzungselement nach Abschluß des Verschiebevorgangs eines Produktes insbesondere über das Obertrum seines Endlosförderers zur Übernahmestation zurückgeführt werden kann, während das Schubelement entgegen der Produktförderrichtung insbesondere über das Untertrum seines Endlosförderers zur Übernahmestation zurückgeführt wird. Für das nächste zu verschiebende Produkt vertauschen die Elemente somit ihre Funktionen, d.h. das bisherige Begrenzungselement wird nun Schubelement, während das bisherige Schubelement nun die Funktion des Begrenzungselement einnimmt.

Die Schubbewegung des Produktes bzw. des Blisterstapels wird in bekannter Weise durch das das Produkt hintergreifende Schubelement erreicht, bei dem es sich um einen oder mehrere nebeneinander angeordnete Finger oder auch um eine Schubplatte handeln kann. Während seiner gesamten Verschiebung ist das Produkt zwischen dem Schubelement und an dem vorlaufenden Begrenzungselement vorzugsweise unter enger Passung geführt. Das vorlaufende Begrenzungselement, bei dem es sich ebenfalls um einen oder mehrere nebeneinander angeordnete Finger oder eine Begrenzungsplatte handeln kann, verhindert, daß sich das Produkt bei plötzlichem Stillstand der Übergabevorrichtung von dem Schubelement löst und unkontrolliert weiterrutscht. Darüber hinaus verhindert das Begrenzungselement im Zusammenwirken mit dem Schubelement eine Schrägstellung des Produktes, da das Produkt zwischen dem Schubelement und dem Begrenzungselement exakt positioniert ist. Dabei kann der Abstand zwischen dem Schubelement und dem Begrenzungselement so gewählt sein, daß das Produkt unter einer geringen Vorspannung zwischen diesen Elementen eingespannt gehalten ist, vorzugsweise ist jedoch vorgesehen, daß der Abstand zwischen dem Schubelement und dem Begrenzungselement exakt der Breite des Produktes entspricht, so daß dieses zwischen den beiden Elementen spannungsfrei gehalten ist.

Um die hohe Leistungsfähigkeit der Übergabevorrichtung zu erreichen, sollte ein neues Produkt bzw. ein neuer Blisterstapel bereits bereitgestellt werden, während das vorherige Produkt noch verschoben wird. Um das bereitstehende Produkt schnell und sicher zwischen dem Schubelement und dem Begrenzungselement aufnehmen zu können, ist erfindungsgemäß vorgesehen, daß das vorlaufende Begrenzungselement nach Beendigung der Verschiebung des Produktes mittels seines 1. Endlosförderers und insbesondere über dessen Obertrum zur Übernahmestation zurückgeführt wird und für das nächste zu verschiebende Produkt, das in der Übernahmestation bereits bereitgestellt ist, als Schubelement dient, indem es auf dessen Rückseite in Anlage gebracht wird. Das für das vorherige Produkt verwendete Schubelement wird hingegen entgegen der Produktförderrichtung mittels seines 2. Endlosförderers und insbesondere über dessen Untertrum zur Übernahmestation zurückgeführt und legt sich dort an der Vorderseite des bereitgestellten Produktes an, so daß es für dieses während des Verschiebevorgangs als Begrenzungselement dient. Somit ist vorgesehen, daß sowohl die Finger des einen Endlosförderers als auch die Finger des anderen Endlosförderers nacheinander als Schubelement und als Begrenzungselement eingesetzt werden.

Es hat sich gezeigt, daß auch eine außermittige Anordnung des Schubelementes relativ zu dem Produkt, d.h. eine außermittige Einleitung der Schubkraft, aufgrund des Begrenzungselementes nicht zu einem Schrägstellen des Produktes führt, da das sich aus der Außermittigkeit ergebende Drehmoment von dem Begrenzungselement in Zusammenwirken mit dem Schubelement aufgenommen wird. Auf diese Weise entfällt die aufwendige Zentrierung des Schubelementes relativ zu dem Produkt.

Bei einem Formatwechsel muß lediglich der Abstand zwischen dem Schubelement und dem Begrenzungselement auf die Breite des neuen Produktes eingestellt werden. Zu diesem Zweck ist es hilfreich, daß das Schubelement und das Begrenzungselement an unterschiedlichen Endlosförderern angebracht sind, die relativ zueinander verstellt werden können. Die beiden Endlosförderer werden vorzugsweise unabhängig voneinander angetrieben, wobei die Antriebsbewegungen jedoch während des gesamten Verschiebevorgangs des Produktes synchronisiert sind, um den vorbestimmten Abstand zwischen dem Schubelement und dem Begrenzungselement beizubehalten.

Weitere Einzelheiten und Merkmale der Erfindung ergeben sich aus der nachstehenden Beschreibung von Ausführungsbeispielen unter Bezugnahme auf die beigefügte Zeichnung. Es zeigen:
- Fig. 1: eine perspektivische Unteransicht der Endlosförderer,
- Fig. 2: eine schematische Darstellung der erfindungsgemäßen Übergabevorrichtung in einer Ausgangsposition,
- Fig. 3: die Übergabestation gemäß Fig. 2 am Ende des Verschiebevorgangs,
- Fig. 4: die Übergabestation gemäß den Fig. 2 und 3 während der Rückstellung der Finger und
- Fig. 5: die Übergabestation in einer Ausgangsstellung für das nächste zu verschiebende Produkt.

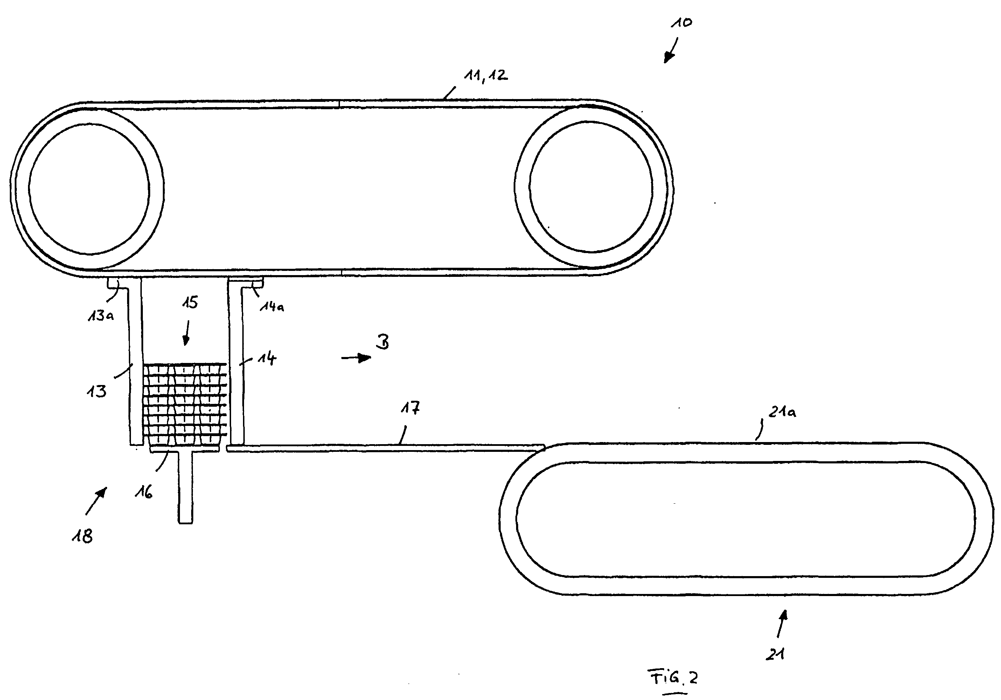

Fig. 2 zeigt eine erfindungsgemäße Übergabevorrichtung 10 in einer Verpackungsmaschine in einer schematischen Seitenansicht. In einer Übernahmestation 18, die einen Hubtisch 16 umfaßt, ist ein Produkt in Form eines Blisterstapels 15 in bekannter, hier nicht näher erläuterter Weise bereitgestellt. An den Hubtisch 16 schließt niveaugleich eine Gleitfläche 17 an, die an ihrem entgegengesetzten Ende nahe dem Obertrum 21a einer weiterführenden Fördervorrichtung 21 liegt, bei der es sich beispielsweise um die Produkt-Förderkette einer Verpackungsmaschine handeln kann. Der Blisterstapel 15 soll von dem Hubtisch 16 über die Gleitfläche 17 bis zu der weiterführenden Fördervorrichtung 21 verschoben und auf deren Obertrum 21a aufgeschoben werden.

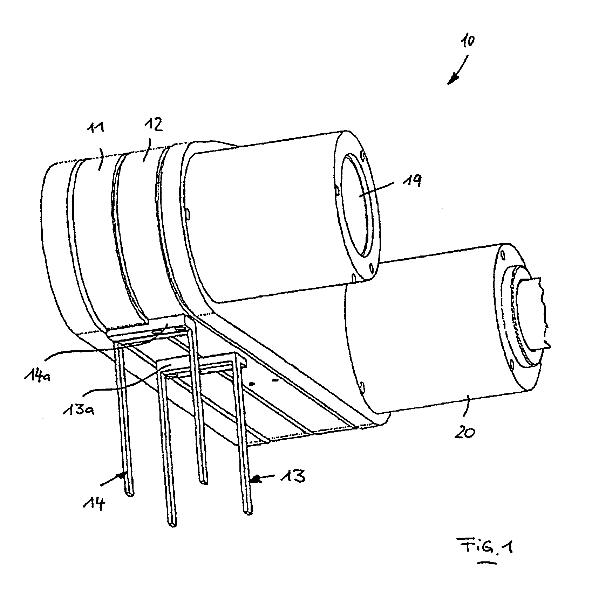

Zur Durchführung der Verschiebebewegung sind im Abstand oberhalb der Gleitfläche 17 zwei umlaufende Endlosförderer 11, 12 vorgesehen, die parallel nebeneinander in einer vertikalen Ebene umlaufen, wie Fig. 1 zeigt. Den beiden Endlosförderern 11, 12 ist jeweils eine eigene Antriebsvorrichtung 19, 20 zugeordnet, so daß die Endlosförderer 11, 12 unabhängig voneinander bidirektional angetrieben werden können. An dem 1. Endlosförderer 11 ist über einen Befestigungsabschnitt 13a die Basis einer U-förmigen, nach unten öffnenden Fingergabel 13 befestigt, die mit dem 1. Endlosförderer 11 umläuft und sich seitlich bis oberhalb des parallelen 2. Endlosförderers 12 erstreckt. An dem 2. Endlosförderer 12 ist über einen Befestigungsabschnitt 14a eine gleichartige U-förmige zweite Fingergabel 14 montiert, die sich seitlich bis in den Bereich des 1. Endlosförderers 11 erstreckt und in Bewegungsrichtung der Endlosförderer 11 und 12 zu der ersten Fingergabel 13 ausgerichtet ist.

Fig. 2 zeigt die Ausgangsstellung eines Übergabe- oder Verschiebevorgangs für den Blisterstapel 15, der über die Gleitfläche 17 in Richtung B zu der weiterführenden Fördervorrichtung 21 verschoben werden soll. Die erste Fingergabel 13 liegt auf der in Bewegungsrichtung B gesehenen Rückseite des Blisterstapels 15 an diesem an und dient als Schubelement. Auf der gegenüberliegenden, in Bewegungsrichtung B gesehenen Vorderseite des Blisterstapels 15 ist die zweite Fingergabel 14 angeordnet, so daß der Blisterstapel 15 unter enger Passung mit geringem Spiel zwischen den beiden Fingergabeln 13 und 14 angeordnet ist.

Zu Beginn des Übergabevorgangs werden die beiden Endlosförderer 11 und 12 und somit die Fingergabeln 13 und 14 synchron in die gleiche Richtung B angetrieben, wodurch auf den Blisterstapel 15 über die als Schubelement wirkende Fingergabel 13 eine Schubkraft in Richtung B ausgeübt wird, die den Blisterstapel 15 von dem Hubtisch 16 auf die Gleitfläche 17 und über diese verschiebt. Die vorlaufende, als Begrenzungselement wirkende Fingergabel 14 bewirkt dabei, daß der Blisterstapel 15 sich nicht schräg stellt oder von der nachlaufenden Fingergabel 13 löst.

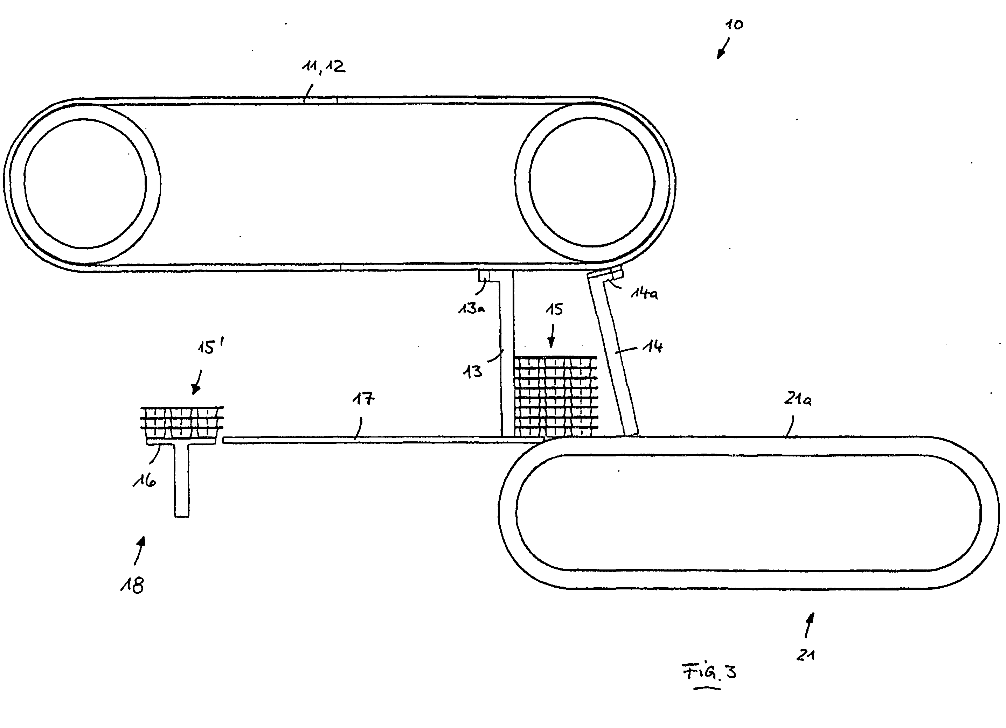

Die synchronisierte Bewegung der beiden Endlosförderer 11 und 12 erfolgt solange, bis der Blisterstapel 15 soweit auf das Obertrum 21a der weiterführenden Fördervorrichtung 21 aufgeschoben ist, daß er von dieser übernommen wird, wie es in Fig. 3 dargestellt ist. Während der Blisterstapel 15 über die Gleitfläche 17 verschoben wird, wird auf dem Hubtisch 16 bereits ein weiterer Blisterstapel 15' aufgestapelt.

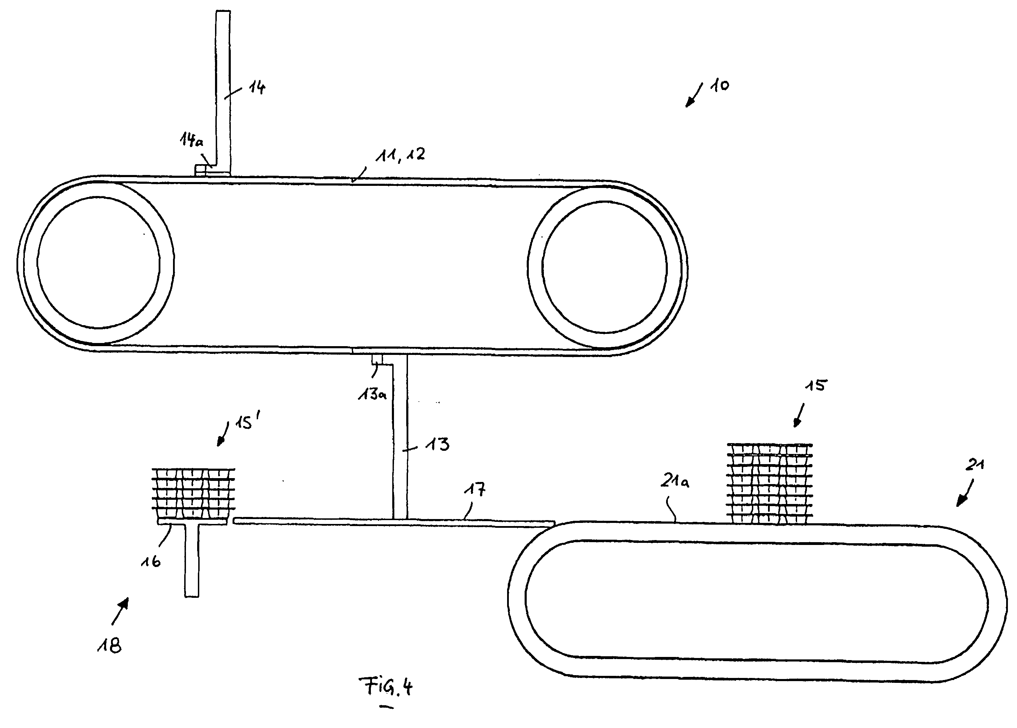

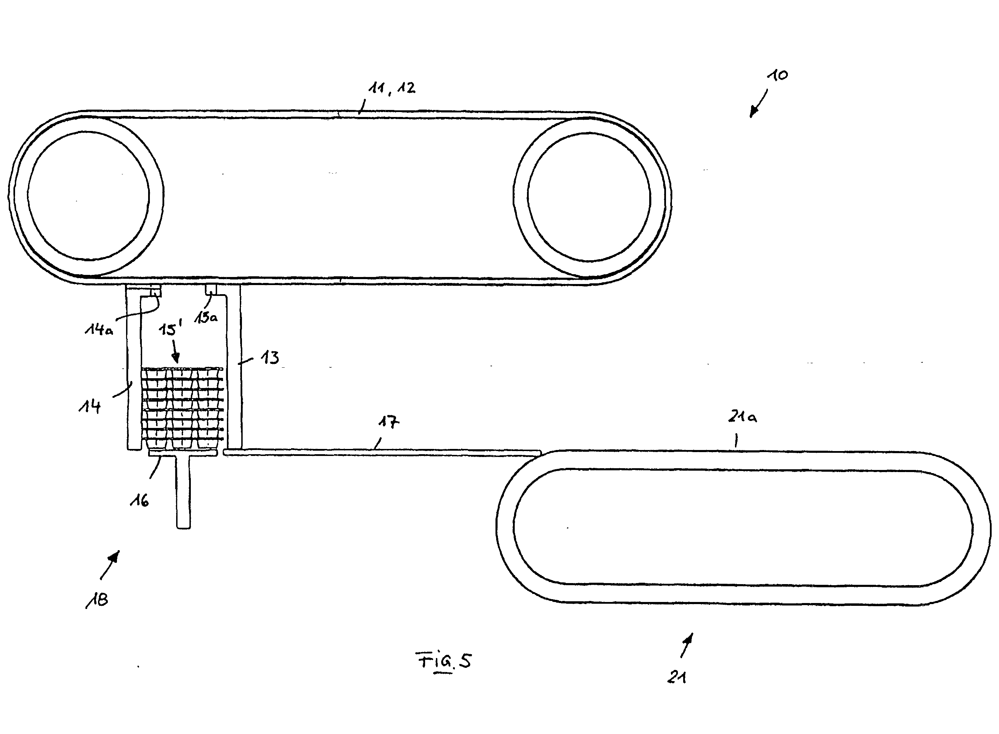

Aus der in Fig. 3 gezeigten Übergabestellung an die weiterführende Fördervorrichtung 21 müssen die Fingergabeln 13 und 14 zu der Übernahmestation 18 zurückgeführt werden. Dies erfolgt durch unterschiedliche Bewegungen der Endlosförderer 11 und 12. Die vorlaufende Fingergabel 14 wird über das Obertrum des 2. Endlosförderers 12 zurückgeführt (siehe Fig. 4) und legt sich dann auf der Rückseite des neuen, auf dem Hubtisch 16 entstehenden Blisterstapels 15' an (siehe Fig. 5). Auf diese Weise wird die für den Blisterstapel 15 als vorlaufendes Begrenzungselement verwendete Fingergabel 14 für den nächsten Blisterstapel 15' als nachlaufendes Schubelement verwendet.

Die für den Blisterstapel 15 als Schubelement dienende Fingergabel 13 wird durch Umkehrung der Bewegungsrichtung des 1. Endlosförderers 11 zu der Übernahmestation 18 zurückgeführt (siehe Fig. 4) und legt sich dann auf der Vorderseite des dort aufgebauten, zu verschiebenden Blisterstapels 15' an (siehe Fig. 5). Die bisher für den Blisterstapel 15 als Schubelement verwendete Fingergabel 13 dient somit bei dem nächsten Blisterstapel 15' als vorlaufendes Begrenzungselement. Die Position der Fingergabeln 13 und 14 nach ihrer Rückführung zu der Übernahmestation 18 ist in Fig. 5 dargestellt. Die dort gezeigte Konstellation entspricht im wesentlichen der Ausgangsstellung gemäß Fig. 2, wobei nunmehr lediglich die beiden Fingergabeln 13 und 14 ausgetauscht sind. Aus der in Fig. 5 dargestellten Stellung läuft nun die Übergabe des Blisterstapels 15' an die weiterführende Fördervorrichtung 21 in geschilderter Weise ab, woraufhin wieder die Rückführung der beiden Fingergabeln 13 und 14 unter gleichzeitigem Wechsel ihrer Funktionalität erfolgt.

## Patentansprüche

1. Übergabevorrichtung in einer Verpackungsmaschine, mit einem an einem 1. umlaufenden Endlosförderer (11) angebrachten und von diesem angetriebenen Schubelement (13), mittels dessen ein zu übergebendes Produkt (15) aus einer Übernahmestation (18) entlang einer Gleitfläche (17) zur Übergabe an eine weiterführende Fördervorrichtung (21) verschiebbar ist, und mit einem dem Produkt (15) vorlaufenden Begrenzungselement (14), das an einem 2. umlaufenden Endlosförderer (12) angebracht und von diesem angetrieben ist, wobei das Produkt (15) zwischen dem Schubelement (13) und dem Begrenzungselement (14) aufnehmbar ist und die Endlosförderer (11, 12) jeweils bidirektional antreibbar und jeweils mit einer eigenen Antriebsvorrichtung (19, 20) versehen sind, so daß das vorlaufende Begrenzungselement (14) über das Obertrum seines Endlosförderers (12) zur Übernahmestation (18) zurückführbar ist und das Schubelement (13) entgegen der Produktförderrichtung B über das Untertrum seines Endlosförderers (11) zur Übernahmestation (18) zurückführbar ist, **dadurch gekennzeichnet, daß** die Endlosförderer (11, 12) oberhalb der Gleitfläche (17) angeordnet sind und parallel zueinander in jeweils einer vertikalen Ebene umlaufen, wobei das Schubelement (13) und das Begrenzungselement (14) jeweils eine an dem jeweiligen Endlosförderer (11, 12) angebrachte U-förmige Fingergabel ist, deren vom zugehörigen Endlosförderer (11, 12) wegweisende Enden offen sind.

2. Übergabevorrichtung nach Anspruch 1, **dadurch gekennzeichnet, daß** die Fingergabeln während der Verschiebung des Produktes (15) mittels der Übergabevorrichtung im wesentlichen vertikal ausgerichtet sind.

3. Übergabevorrichtung nach einem Anspruch 1 oder 2, **dadurch gekennzeichnet, daß** das Produkt (15) während seines gesamten Verschiebeweges zwischen dem Schubelement (13) und dem Begrenzungselement (14) unter enger Passung aufnehmbar ist.

4. Übergabevorrichtung nach Anspruch 1 oder 2, **dadurch gekennzeichnet, daß** das Produkt (15) während seines gesamten Verschiebeweges aufgrund des Abstandes zwischen dem Schubelement (13) und dem Begrenzungselement (14) unter geringer Vorspannung zwischen diesen Elementen eingespannt gehalten ist.

5. Übergabevorrichtung nach einem der Ansprüche 1 bis 4, **dadurch gekennzeichnet, daß** die Antriebsbewegungen der Antriebsvorrichtungen (19, 20) während des gesamten Verschiebevorgangs des Produkts synchronisiert sind, um den vorbestimmten Abstand zwischen dem Schubelement (13) und dem Begrenzungselement (14) beizubehalten.

6. Übergabevorrichtung nach einem der Ansprüche 1 bis 5, **dadurch gekennzeichnet, daß** die Endlosförderer (11, 12) relativ zueinander verstellbar sind.

## Claims

1. Transfer device in a packaging machine with a pushing element (13) mounted to a first circulating endless conveyor (11) and driven thereby, by means of which a product (15) to be conveyed can be displaced from a transfer station (18) along a sliding surface (17) for transfer to a continuous transport device (21), and with a limiting element (14) which is upstream of the product (15) and which is mounted to a second circulating endless conveyor (12) and driven thereby, wherein the product (15) can be received between the pushing element (13) and the limiting element (14), and each endless conveyor (11, 12) can be driven in two directions and is provided with its own drive device (19, 20) such that the leading limiting element (14) can be returned to the transfer station (18) via the upper run of its endless conveyor (12) and the pushing element (13) can be returned to the transfer station (18), against the product supply direction B, via the lower run of its endless conveyor (11), **characterized in that** the endless conveyors (11, 12) are disposed above the sliding surface (17) and circulate parallel to each other, each in a vertical plane, wherein both the pushi ng element (13) and the limiting element (14) are each formed by a U-shaped finger fork mounted to the respective endless conveyor (11, 12), each finger fork having an end, facing away from the respective endless conveyor (11, 12), which is open.

2. Transfer device according to claim 1, **characterized in that**, by means of the transfer device, the finger forks are oriented substantially vertically during displacement of the product (15).

3. Transfer device according to claim 1 or 2, **characterized in that** the product (15) can be received between the pushing element (13) and the limiting element (14) with tight fit during its entire displacement motion.

4. Transfer device according to claim 1 or 2, **characterized in that**, in consequence of the separation between the pushing element (13) and the limiting element (14), the product (15) is clamped between these elements with slight pre-tensioning during its entire displacement motion.

5. Transfer device according to one of the claims 1 to 4, **characterized in that** the drive motion of the drive devices (19, 20) are synchronized during the entire product displacement procedure to maintain the predetermined separation between the pushing element (13) and the limiting element (14).

6. Transfer device according to one of the claims 1 to 5, **characterized in that** the endless conveyors (11, 12) can be adjusted relative to each other.

## Revendications

1. Dispositif de transfert dans une machine d'emballage comportant un élément de poussée (13) monté sur un premier convoyeur (11) rotatif sans fin et entraîné par celui-ci, au moyen duquel un produit (15) à transférer peut être déplacé à partir d'une station de transfert (18) le long d'une surface de glissement (17) pour être transféré à un convoyeur (21) continuant l'acheminement, et comprenant un élément de délimitation (14) précédant le produit (15) qui est monté sur un second convoyeur rotatif sans fin (12) et entraîné par celui-ci, le produit (15) pouvant être réceptionné entre l'élément de poussée (13) et l'élément de délimitation (14), et les convoyeurs sans fin (11, 12) pouvant chacun être entraînés de façon bidirectionnelle et étant chacun équipés de leur propre dispositif d'entraînement (19, 20) de façon que l'élément de délimitation (14) en aval puisse être retourné à la station de transfert (18) par l'intermédiaire de la bande supérieure de son convoyeur sans fin (12) et l'élément de poussée (13) puisse être retourné à la station de transfert (18) en direction contraire du convoyage B du produit par l'intermédiaire de la bande inférieure de son convoyeur sans fin (11), **caractérisé en ce que** les convoyeurs sans fin (11, 12) sont disposés au-dessus de la surface de glissement (17) et tournent chacun dans un plan vertical et parallèlement l'un à l'autre, l'élément de poussée (13) et l'élément de délimitation (14) étant des fourches en forme de U chacune fixée à son convoyeur sans fin (11,12) respectif dont les extrémités, éloignées des convoyeurs sans fin (11, 12) correspondants, sont ouvertes.

2. Dispositif de transfert selon la revendication 1, **caractérisé en ce qu'**au cours du déplacement du produit (15) au moyen du dispositif de transfert, les fourches sont dans un alignement sensiblement vertical.

3. Dispositif de transfert selon l'une quelconque des revendications 1 ou 2, **caractérisé en ce que** le produit (15) peut être réceptionné à ajustement étroit durant tout le trajet de son déplacement entre l'élément de poussée (13) et l'élément de délimitation (14).

4. Dispositif de transfert selon la revendication 1 ou 2, **caractérisé en ce qu'**en raison de la distance entre l'élément de poussée (13) et l'élément de délimitation (14), le produit (15) est maintenu enserré entre ces éléments sous une légère précontrainte durant tout le trajet de son déplacement.

5. Dispositif de transfert selon l'une quelconque des revendications 1 à 4, **caractérisé en ce que** les mouvements d'entraînement des dispositifs d'entraînement (19, 20) sont synchrones durant tout le processus de déplacement du produit, pour conserver la distance prédéfinie entre l'élément de poussée (13) et l'élément de délimitation (14).

6. Dispositif de transfert selon l'une quelconque des revendications 1 à 5, **caractérisé en ce que** les convoyeurs sans fin (11, 12) sont réglables l'un par rapport à l'autre.
